# EUROPÄISCHE PATENTSCHRIFT

(11) **EP 3 269 966 B1**
(45) Veröffentlichungstag und Bekanntmachung des Hinweises auf die Patenterteilung: **11.12.2019**
(21) Anmeldenummer: 17176656.1
(22) Anmeldetag: 19.06.2017
(51) Int. Cl.: F02D 9/04, F02D 9/06

(54) **KOPPLUNGSANORDNUNG ZUR DREHKOPPLUNG EINER SCHWENKWELLE EINER KLAPPENBLENDE EINER ABGASKLAPPE MIT EINEM ANTRIEBSORGAN**
COUPLING ARRANGEMENT FOR A ROTATIONAL COUPLING OF A SWIVEL SHAFT OF A FLAPS SHUTTER OF AN EXHAUST GAS FLAP WITH A DRIVE ORGAN
SYSTÈME DE COUPLAGE ROTATIF D'UN ARBRE DE PIVOTEMENT D'UN DISPOSITIF DE FERMETURE D'UN CLAPET D'ÉCHAPPEMENT À L'AIDE D'UN ORGANE D'ENTRAÎNEMENT

(30) Priorität: 28.06.2016 DE 102016111762; 09.08.2016 DE 102016114703
(43) Veröffentlichungstag der Anmeldung: 17.01.2018
(73) Patentinhaber: Eberspächer Exhaust Technology GmbH & Co. KG, 66539 Neunkirchen (DE)
(72) Erfinder: Schmitt, Steffen, 73760 Ostfildern (DE); Varelis, Stefanos, 70771 Leinfelden (DE); Birgler, Markus, 73249 Wernau (DE); Wirth, Georg, 73230 Kirchheim u. Teck (DE)
(74) Vertreter: Ruttensperger Lachnit Trossin Gomoll

(56) Entgegenhaltungen:
- EP-A1- 1 887 200
- DE-A1- 4 028 931
- US-A- 4 566 424
- US-A- 5 531 205
- US-A1- 2003 056 836

## Beschreibung

Die vorliegende Erfindung betrifft eine Kopplungsanordnung zur Drehkopplung einer Schwenkwelle einer Klappenblende einer Abgasklappe mit einem Antriebsorgan, umfassend wenigstens ein Kopplungselement mit einem zur Ankopplung an die Schwenkwelle ausgebildeten ersten Kopplungsbereich, einem zur Ankopplung an das Antriebsorgan ausgebildeten zweiten Kopplungsbereich und wenigstens einem den ersten Kopplungsbereich mit dem zweiten Kopplungsbereich verbindenden Verbindungsbereich, wobei im Kopplungszustand der erste Kopplungsbereich und der zweite Kopplungsbereich in Richtung aufeinander zu oder in Richtung voneinander weg vorgespannt sind.

Eine derartige Kopplungsanordnung ist aus der DE 10 2009 013 815 A1 bekannt. Zur Kopplung einer Antriebswelle eines Klappenantriebs mit einer Schwenkwelle einer Klappenblende einer Abgasklappe ist eine Kopplungsanordnung mit einem aus Drahtmaterial oder dergleichen ausgebildeten, C-förmigen Kopplungselement vorgesehen. In seinen durch jeweilige C-Schenkel bereitgestellten Kopplungsbereichen greift das Kopplungselement in zugeordnete Aussparungen der Antriebswelle einerseits und der Schwenkwelle andererseits ein und stellt somit eine Drehkopplung zwischen diesen beiden Bauteilen her. Die beiden C-Schenkel sind im Kopplungszustand in Richtung voneinander weg vorgespannt und belasten somit die Schwenkwelle der Klappenblende in Richtung von der Antriebswelle bzw. dem Klappenantrieb weg.

Die US 6,598,619 B2 offenbart eine Abgasklappe mit einem in Form einer Antriebswelle ausgebildeten Antriebsorgan und einer dazu koaxial angeordneten Schwenkwelle. Eine die Antriebswelle mit der Schwenkwelle zur gemeinsamen Drehbewegung koppelnde Kopplungsanordnung umfasst ein kastenartig ausgebildetes Kopplungselement.

Es ist die Aufgabe der vorliegenden Erfindung, eine Kopplungsanordnung zur Drehkopplung einer Schwenkwelle einer Klappenblende einer Abgasklappe mit einem Antriebsorgan vorzusehen, welche bei guter thermischer Entkopplung der Schwenkwelle von dem Antriebsorgan eine erhöhte Torsionsfestigkeit aufweist.

Eine Kopplungsanordnung gemäß dem Oberbegriff des Anspruchs 1 ist aus der DE 40 28 931 A1 bekannt. Bei dieser Kopplungsanordnung ist ein die Kopplung zwischen einer Schwenkquelle einer Klappenblende einer Abgasklappe und einem Antriebsorgan herstellendes Kopplungselement mit S-förmiger Struktur bereitgestellt. Einer der beiden S-Schenkel ist an das Antriebsorgan angebunden, der andere der beiden S-Schenkel ist an die Schwenkquelle der Klappenblende angebunden, so dass das Antriebsorgan und die Schwenkwelle in Richtung einer Schwenkachse bezüglich einander vorgespannt sind.

Erfindungsgemäß wird diese Aufgabe gelöst durch eine Kopplungsanordnung zur Drehkopplung einer Schwenkwelle einer Klappenblende einer Abgasklappe mit einem Antriebsorgan, umfassend wenigstens ein Kopplungselement mit einem zur Ankopplung an die Schwenkwelle ausgebildeten ersten Kopplungsbereich, einem zur Ankopplung an das Antriebsorgan ausgebildeten zweiten Kopplungsbereich und wenigstens einem den ersten Kopplungsbereich mit dem zweiten Kopplungsbereich verbindenden Verbindungsbereich, wobei im Kopplungszustand der erste Kopplungsbereich und der zweite Kopplungsbereich in Richtung aufeinander zu oder in Richtung voneinander weg vorgespannt sind,

Dabei ist ferner vorgesehen, dass das wenigstens eine Kopplungselement mit Flachmaterial ausgebildet ist.

Für einen einfachen Aufbau und eine stabile Kopplungswirkung ist ein, also ein einziges Kopplungselement vorgesehen, und anschließend an einen ersten Endbereich des ersten Kopplungsbereichs und einen ersten Endbereich des zweiten Kopplungsbereichs ist ein erster Verbindungsbereich vorgesehen und anschließend an einen zweiten Endbereich des ersten Kopplungsbereichs und einen zweiten Endbereich des zweiten Kopplungsbereichs ist ein zweiter Verbindungsbereich vorgesehen.

Dieses einzige Kopplungselement ist aus einem, also einem einzigen Flachmaterialstück ausgebildet und ein Kopplungsbereich von erstem Kopplungsbereich und zweitem Kopplungsbereich umfasst dabei einander überlappend angeordnete oder durch ein Verbindungsteil verbundene Endbereiche des Flachmaterialstücks.

Durch das Ausgestalten des wenigstens einen Kopplungselements mit Flachmaterial wird erreicht, dass bei vergleichsweise kleinem Wärmeleitungsquerschnitt und großer Oberfläche zur Abgabe von Wärme zur Umgebung hin dieses Bauteil eine erhöhte Torsionsfestigkeit und somit eine verbesserte Drehkopplung des Antriebsorgans mit der Schwenkwelle bereitstellt. Gleichzeitig kann das aus Flachmaterial aufgebaute Kopplungselement nach Art einer Blattfeder die für das Vorspannen der Schwenkwelle im Allgemeinen vorteilhafte Vorspannwirkung erzeugen.

Es ist darauf hinzuweisen, dass im Sinne der vorliegenden Erfindung mit Flachmaterial ein Material angesprochen ist, welches, im Querschnitt betrachtet, in einer Richtung, im Allgemeinen einer Breitenrichtung, eine deutlich größere Ausdehnung aufweist, als in einer dazu orthogonalen Richtung, im Allgemeinen einer Dickenrichtung. Beispielsweise kann die Ausdehnung in der Breitenrichtung mindestens dem Fünffachen oder dem Zehnfachen der Ausdehnung in der Dickenrichtung entsprechen. Derartiges Material kann allgemein auch als Bandmaterial bezeichnet werden.

Um einerseits die gewünschte Torsionsfestigkeit zu erreichen, andererseits auch die angestrebte Vorspannwirkung bereitstellen zu können, wird vorgeschlagen, dass das wenigstens eine Kopplungselement mit Blechmaterial, vorzugsweise Stahlblech oder Titanblech, ausgebildet ist.

Bei einer alternativen Ausgestaltungsvariante sind zwei Kopplungselemente vorgesehen, wobei diese beiden Kopplungselemente so angeordnet sein können, dass der erste Kopplungsbereich einen ersten Endbereich eines der beiden Kopplungselemente und einen ersten Endbereich des anderen der beiden Kopplungselemente umfasst und der zweite Kopplungsbereich einen zweiten Endbereich des einen der beiden Kopplungselemente und einen zweiten Endbereich des anderen der beiden Kopplungselemente umfasst.

Um in den beiden Kopplungsbereichen eine stabile Ankopplung der beiden Kopplungselemente sowohl an das Antriebsorgan, als auch an die Schwenkwelle gewährleisten zu können, wird vorgeschlagen, dass die beiden ersten Endbereiche der beiden Kopplungselemente einander überlappend angeordnet oder durch ein Verbindungsteil verbunden sind und die beiden zweiten Endbereiche der beiden Kopplungselemente einander überlappend angeordnet oder durch ein Verbindungsteil verbunden sind.

Jedes der beiden Kopplungselemente kann aus einem Flachmaterialstück gebildet sein.

Bei einer eine hohe Stabilität der Kopplungselemente in sich gewährleistenden, andererseits auch die erforderliche Axialelastizität zulassenden Ausgestaltungsvariante kann vorgesehen sein, dass wenigstens ein Verbindungsbereich V-förmig ausgebildet ist.

Zum Vermeiden von lokalen Überlastungen in den Verbindungsbereichen kann vorgesehen sein, dass wenigstens ein Verbindungsbereich Ω-(Omega)-förmig ausgebildet ist.

Bei einer weiteren alternativen Ausgestaltung kann vorgesehen sein, dass wenigstens ein Verbindungsbereich U-förmig ausgebildet ist. Auch dies vermeidet durch stark gebogene bzw. gekrümmte Bereiche eingeführte lokale Überlastungen.

Die vorliegende Erfindung betrifft ferner eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende sowie einen Schwenkantrieb für die Schwenkwelle mit einem Antriebsorgan, ferner umfassend eine das Antriebsorgan mit der Schwenkwelle zur gemeinsamen Drehung um die Schwenkachse koppelnde Kopplungsanordnung mit erfindungsgemäßem Aufbau.

Durch den Einsatz der erfindungsgemäß aufgebauten Kopplungsanordnung wird einerseits eine stabile und definierte Kopplung des Antriebsorgans mit der Schwenkwelle gewährleistet. Andererseits ermöglicht die durch die Kopplungsanordnung generierte Vorspannung eine definierte Positionierung der Schwenkwelle und damit der Klappenblende in dem diese aufnehmenden Klappenrohr.

Zur drehfesten Kopplung der Kopplungsanordnung mit dem Antriebsorgan bzw. der Schwenkwelle wird vorgeschlagen, dass an der Schwenkwelle eine erste Gegen-Formschluss-Kopplungsformation und an dem ersten Kopplungsbereich der Kopplungsanordnung eine mit der ersten Formschluss-Kopplungsformation in Kopplungseingriff stehende erste Formschluss-Kopplungsformation vorgesehen sind, und dass an dem Antriebsorgan eine zweite Gegen-Formschluss-Kopplungsformation und an dem zweiten Kopplungsbereich der Kopplungsanordnung eine mit der zweiten Gegen-Formschluss-Kopplungsformation in Kopplungseingriff stehende zweite Formschluss-Kopplungsformation vorgesehen sind. Insbesondere kann vorgesehen sein, dass wenigstens eine Formschluss-Kopplungsformation oder Gegen-Formschluss-Kopplungsformation ein Mehrkant-Außenprofil und die jeweils zugeordnete Gegen-Formschluss-Kopplungsformation oder Formschluss-Kopplungsformation ein komplementäres Mehrkant-Innenprofil aufweist.

Um vermittels der Kopplungsanordnung eine definierte Positionierung der Schwenkwelle und somit der daran getragenen Klappenblende gewährleisten zu können, wird vorgeschlagen, dass der erste Kopplungsbereich in Richtung auf die Schwenkwelle zu vorgespannt ist und der zweite Kopplungsbereich in Richtung auf das Antriebsorgan zu vorgespannt ist, vorzugsweise derart, dass durch die Kopplungsanordnung die Schwenkwelle in Richtung vom Antriebsorgan weg vorgespannt ist.

Die vorangehend angesprochene Vorspannung der beiden Kopplungsbereiche jeweils in Richtung auf die mit diesen zur gemeinsamen Drehung zu koppelnde Baugruppe Schwenkwelle bzw. Antriebsorgan zu kann erfindungsgemäß ferner dazu genutzt werden, eine stabile Kopplung zwischen einem jeweiligen Kopplungsbereich und der damit zu koppelnden Baugruppe zu erzeugen. Hierzu wird vorgeschlagen, dass die erste Gegen-Formschluss-Kopplungsformation sich in Richtung auf das Antriebsorgan zu verjüngend ausgebildet ist, oder/und dass die zweite Gegen-Formschluss-Kopplungsformation sich in Richtung auf die Schwenkwelle zu verjüngend ausgebildet ist.

Die vorliegende Erfindung wird nachfolgend mit Bezug auf die beiliegenden Figuren detailliert beschrieben. Es zeigt:
- Fig. 1: eine Seitenansicht einer Abgasklappe mit einem zugeordneten Klappenantrieb;
- Fig. 2: vergrößert den Bereich der Kopplung des Klappenantriebs mit einer Schwenkwelle;
- Fig. 3: in perspektivischer Ansicht eine Kopplungsanordnung;
- Fig. 4: eine alternative Ausgestaltungsart einer Kopplungsanordnung zwischen einem Antriebsorgan und einer Schwenkwelle;
- Fig. 5: die Kopplungsanordnung der Fig. 4 in Seitenansicht;
- Fig. 6: die Kopplungsanordnung der Fig. 4 in perspektivischer Ansicht;
- Fig. 7: eine der Figur 5 entsprechende Ansicht einer alternativen Ausgestaltungsart;
- Fig. 8: eine alternative Ausgestaltungsart einer Kopplungsanordnung zwischen einem Antriebsorgan und einer Schwenkwelle;
- Fig. 9: in ihren Darstellungen a), b), c) und d) verschiedene Beispiele für die Ausgestaltung von Formschluss-Kopplungsformationen bzw. Gegen-Formschluss-Kopplungsformationen;
- Fig.10: eine Detailansicht der mit einem Antriebsorgan bzw. einer Schwenkwelle gekoppelten Kopplungsbereiche einer Kopplungsanordnung.

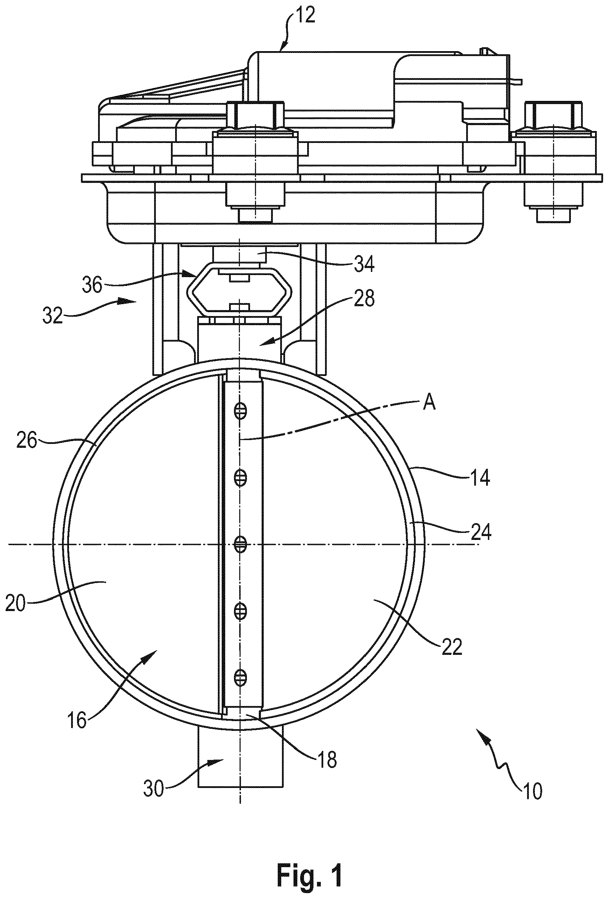

Die Fig. 1 zeigt in Seitenansicht eine allgemein mit 10 bezeichnete und beispielsweise in einer Abgasanlage einer Brennkraftmaschine einsetzbare Abgasklappe mit einem dieser zugeordneten Klappenantrieb 12. Die Abgasklappe 10 umfasst ein Klappenrohr 14, in welchem eine allgemein mit 16 bezeichnete Klappenblende an einer Schwenkwelle 18 um eine Schwenkachse A schwenkbar getragen ist. Die Klappenblende 16 umfasst zwei Klappenflügel 20, 22, welche bei in einer Sperrstellung positionierter Klappenblende 16 an am Innenumfang des Klappenrohrs 14 vorgesehenen Flügelanschlägen 24, 26 anliegen. Die Schwenkwelle 18 ist an ihren beiden axialen Endbereichen 28, 30 bezüglich des Klappenrohrs 14 vermittels jeweiliger Lageranordnungen um die Schwenkachse A drehbar bzw. schwenkbar getragen. In ihrem ersten axialen Endbereich 28 ist die Schwenkwelle 18 vermittels einer nachfolgend beschriebenen Kopplungsanordnung 32 mit einem Antriebsorgan 34 des Klappenantriebs 12, beispielsweise einer Antriebswelle, zur gemeinsamen Drehung gekoppelt. In diesem Bereich kann die Schwenkwelle 18 direkt oder über ein damit drehfestes Bauteil an die Kopplungsanordnung 32 angekoppelt sein.

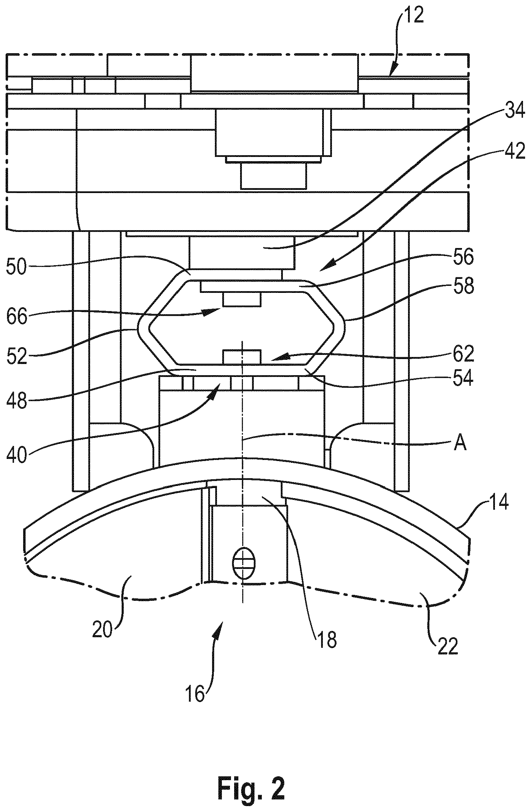

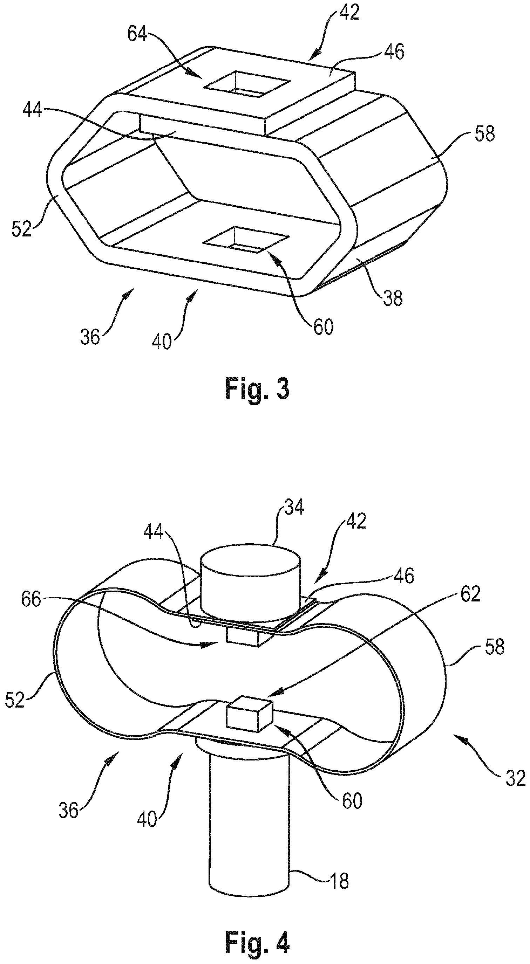

Dieser Bereich der Kopplung der Schwenkwelle 18 mit dem Antriebsorgan 34 bzw. die zur Kopplung eingesetzte Kopplungsanordnung 32 ist in den Fig. 2 und 3 detaillierter gezeigt.

Die Kopplungsanordnung 32 umfasst in dem in den Fig. 1 bis 3 dargestellten Ausgestaltungsbeispiel ein aus Flachmaterial aufgebautes Kopplungselement 36. Das Kopplungselement 36 ist aus einem einzigen Flachmaterialstück 38 aufgebaut, welches beispielsweise durch Heraustrennen aus einem plattenartigen Ausgangsmaterial bereitgestellt und dann in die in Fig. 3 dargestellte Konfiguration gebogen werden kann. Vorzugsweise ist das Flachmaterialstück 38 bzw. das damit aufgebaute Kopplungselement 36 aus Blechmaterial, wie z.B. Stahlblech, insbesondere Federstahlblech, vorzugsweise Edelstahl, oder Titanblech, aufgebaut. Das zunächst in ebener Konfiguration bereitgestellte Flachmaterialstück 38 wird in die in Fig. 3 erkennbare Konfiguration gebogen, bei welcher ein zur Kopplung mit der Schwenkwelle 18 ausgebildeter erster Kopplungsbereich 40 und ein zur Kopplung mit dem Antriebsorgan 34 ausgebildeter zweiter Kopplungsbereich 42 einander mit jeweiligen Flachseiten z. B. im Wesentlichen parallel gegenüber liegen. Das in diese Konfiguration gebogene Flachmaterialstück 38 bildet im Wesentlichen eine in sich geschlossene ringartige Struktur. Hierzu sind die beiden Endbereiche 44, 46 des Flachmaterialstücks 38 im zweiten Kopplungsbereich 42 bzw. den zweiten Kopplungsbereich 42 bereitstellend einander überlappend angeordnet. Diese sich überlappenden Endbereiche 44, 46 können beispielsweise durch Materialschluss, insbesondere Verschweißung, miteinander verbunden sein, können aber auch einander lose überlappend positioniert sein.

An einen ersten Endbereich 48 des ersten Kopplungsbereichs 40 bzw. einen ersten Endbereich 50 des zweiten Kopplungsbereichs 42 schließt ein in diesem Ausgestaltungsbeispiel mit V-förmiger Gestalt ausgebildeter erster Verbindungsbereich 52 an die beiden Kopplungsbereiche 40, 42 an. In einem zweiten Endbereich 54 des ersten Kopplungsbereichs 40 und einem zweiten Endbereich 56 des zweiten Kopplungsbereichs 42 schließt an die beiden Kopplungsbereiche 40, 42 ein zweiter ebenfalls mit V-förmiger Gestalt ausgebildeter Verbindungsbereich 58 an. Auf Grund der Ausgestaltung des einzigen Kopplungselements 36 aus einem einzigen Flachmaterialstück 38 bilden die beiden Verbindungsbereiche 52, 58 mit den durch diese verbundenen Kopplungsbereichen 40, 42 eine integrale Struktur.

Zur drehfesten Ankopplung an die Schwenkwelle 18 einerseits und das Antriebsorgan 34 andererseits weist das Kopplungselement 36 in seinem ersten Kopplungsbereich 40 eine erste Formschluss-Kopplungsformation 60 auf. In Entsprechung dazu weist die Schwenkwelle 18 an ihrem ersten axialen Endbereich 28 eine erste Gegen-Formschluss-Kopplungsformation 62 auf. Im zweiten Kopplungsbereich 42 weist das Kopplungselement 36 eine zweite Formschluss-Kopplungsformation 64 auf. In Entsprechung dazu weist das Antriebsorgan 34 eine zweite Gegen-Formschluss-Kopplungsformation 66 auf. Im dargestellten Beispiel sind die beiden Formschluss-Kopplungsformationen 60, 64 als in den beiden Kopplungsbereichen 40, 42 ausgebildete Mehrkant-Innenprofile bereitgestellt, hier mit im Wesentlichen rechteckiger bzw. quadratischer Struktur. Die beiden Gegen-Formschluss-Kopplungsformationen 62, 66 sind in Entsprechung dazu als Mehrkant-Außenprofile ausgebildet, welche im Wesentlichen spielfrei in die Mehrkant-Innenprofile der Formschluss-Kopplungsformationen 60, 64 eingepasst werden können und somit eine im Wesentlichen spielfreie Drehkopplung der Schwenkwelle 18 mit dem Antriebsorgan 34 gewährleisten.

Es sei hier darauf hingewiesen, dass auch andere einen in Drehrichtung formschlüssig wirkenden Zusammenhalt gewährleistende Formationen verwendet werden können.

Durch das Ausgestalten der Kopplungsanordnung 32 mit dem einzigen Kopplungselement 36, in welchem die beiden Kopplungsbereiche 40, 42 beidseits der Schwenkachse A durch die Verbindungsbereiche 52, 58 miteinander verbunden sind, wird auch auf Grund der Ausgestaltung des Kopplungselements 36 aus Flachmaterial eine in sich torsionssteife Anordnung erhalten, welche eine definierte Drehkopplung der Schwenkwelle 18 mit dem Antriebsorgan 34 gewährleistet und somit eine exakte Einstellbarkeit der Schwenkposition der Klappenblende 16 im Klappenrohr 14 ermöglicht. Gleichzeitig weist das aus dem Flachmaterialstück 38 aufgebaute Kopplungselement 36 auf Grund der vergleichsweise kleinen Querschnittsfläche einen hohen Wärmeleitwiderstand auf, wobei auf Grund der flachen bzw. bandartigen Ausgestaltung des Kopplungselements 36 dieses gleichzeitig eine große Oberfläche aufweist, um somit aus dem Bereich der Abgasklappe 10 aufgenommene Wärme effizient zur Umgebung hin abgeben zu können und die Einleitung der Wärme in den Klappenantrieb 12 so weit als möglich zu unterbinden.

Da weiterhin das Kopplungselement 36 bzw. das zu dessen Aufbau eingesetzte Flachmaterialstück 38 aus Blechmaterial, wie z.B. Stahlblech oder Titanblech, aufgebaut ist, welches eine federelastische Eigenschaft bereitstellen kann, wird es möglich, das Kopplungselement 36 so auszugestalten bzw. so zwischen das Antriebsorgan 34 und die Schwenkwelle 18 einzusetzen, dass die beiden Kopplungsbereiche 40, 42 im Einbauzustand in Richtung voneinander weg vorgespannt sind, also der erste Kopplungsbereich 40 in Richtung auf die Schwenkwelle 18 zu vorgespannt ist und der zweite Kopplungsbereich 42 in Richtung auf das Antriebsorgan 34 zu vorgespannt ist. Somit wird durch das Kopplungselement 36 unter Abstützung des zweiten Kopplungsbereichs 42 am Antriebsorgan 34 bzw. am Klappenantrieb 12 die Schwenkwelle 18 durch den ersten Kopplungsbereich 40 in Richtung vom Klappenantrieb 12 weg belastet. Dies gewährleistet trotz des allgemein unvermeidbaren Lagerspiels der die Schwenkwelle 18 bezüglich des Klappenrohrs 14 abstützenden Lager eine definierte Positionierung der Schwenkwelle 18 und somit auch der daran getragenen Klappenblende 16 im Inneren des Klappenrohrs 14. Auf Grund der beiden Verbindungsbereiche 52, 58 wird ferner eine symmetrische Belastung der Schwenkwelle 18 bzw. der diese abstützenden Lager erreicht, wodurch die Lagerreibung verringert werden kann.

Eine abgewandelte Ausgestaltungsform des Kopplungselements 36 ist in den Fig. 4 bis 6 dargestellt. Während hinsichtlich der Ausgestaltung der beiden Kopplungsbereiche 40, 42 das in den Fig. 4 bis 6 dargestellte Kopplungselement 32 im Wesentlichen dem vorangehend beschriebenen Kopplungselement 32 der Ausgestaltungsform der Fig. 1 bis 3 entspricht, ist zu erkennen, dass die Verbindungsbereiche 52, 58 ausgehend von den beiden einander im Wesentlichen parallel gegenüber angeordneten Kopplungsbereichen 40, 42 eine sich zunächst erweiternde Struktur des Kopplungselements 36, also allgemein eine Ω-förmige Struktur bereitstellen, so dass das gesamte Kopplungselement 36 eine knochenartige Kontur aufweist. Dabei sind, anders als bei der vorangehend beschriebenen Ausgestaltungsform die beiden Verbindungsbereiche 52, 58 im Wesentlichen ohne knickartige Verformungsbereiche mit im Wesentlichen kreisrunder Struktur bereitgestellt, so dass das Auftreten von Belastungsspitzen und somit eine lokale Überlastung des Kopplungselements 36 vermieden werden können.

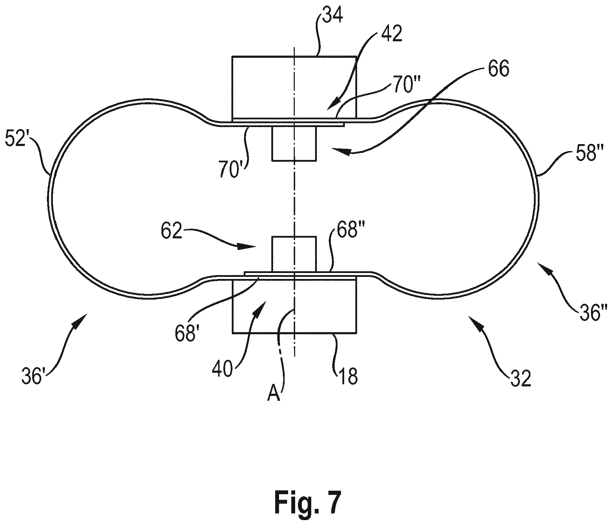

Eine weitere abgewandelte Ausgestaltungsform der Kopplungsanordnung ist in Fig. 7 dargestellt. Bei der Ausgestaltungsform gemäß Fig. 7 weist die Kopplungsanordnung 32 zwei Kopplungselemente 36', 36" auf. Jedes der beiden Kopplungselemente 36', 36" weist beispielsweise wieder die vorangehend bereits angesprochene Ω-förmige Struktur auf. Der erste Kopplungsbereich 40 umfasst zwei einander überlappend angeordnete erste Endbereiche 68', 68" der beiden Kopplungselemente 36' und 36". Der zweite Kopplungsbereich 42 umfasst zwei einander überlappend angeordnete zweite Endbereiche 70', 72" der beiden Kopplungselemente 36', 36". Dabei erstrecken die beiden Kopplungselemente 36', 36" sich mit ihren beiden Verbindungsbereichen 52', 58" bezüglich der Schwenkachse A in einander entgegengesetzten Richtungen. In den beiden Kopplungsbereichen 40, 42 können die beiden einander jeweils überlappend angeordneten Endbereiche 68', 68" bzw. 70', 70" zum Bereitstellen einer fest montierten Baugruppe beispielsweise durch Verschweißung miteinander fest verbunden sein.

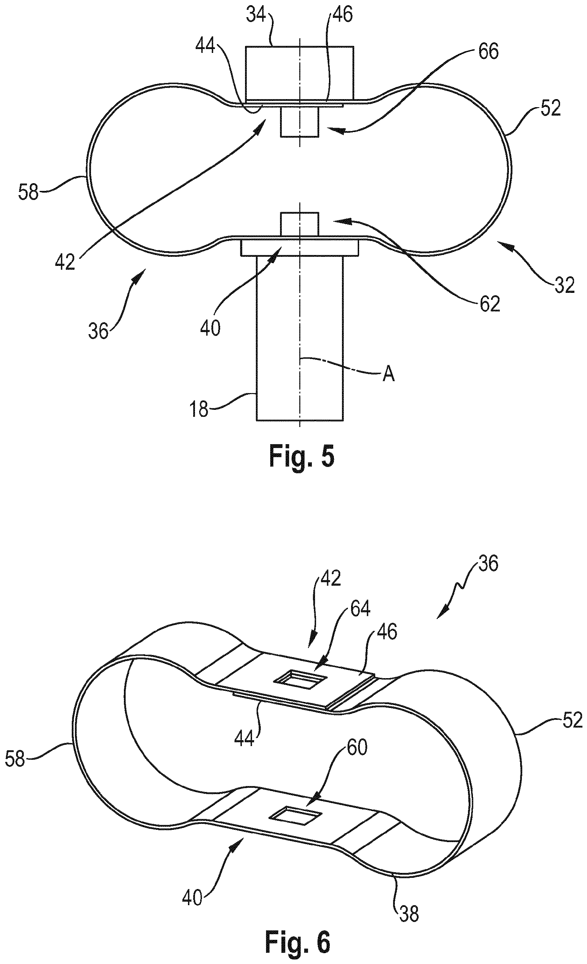

Zur Ankopplung an das Antriebsorgan 34 bzw. die Schwenkwelle 18 können die beiden Kopplungsbereiche 40, 42 so ausgestaltet sein, wie mit Bezug auf die vorangehend beschriebene Ausgestaltungsformen beschrieben und beispielsweise in den Fig. 3 und 5 dargestellt.

So wie auch bei den vorangehend beschriebenen Ausgestaltungsformen wird bei der in Fig. 7 dargestellten Ausgestaltungsform der Kopplungsanordnung 32 mit zwei Kopplungselementen 36', 36" eine in Achsrichtung gleichmäßige und ein Verkippen vermeidende Belastung der Schwenkwelle 18 in Richtung vom Klappenantrieb 12 weg erreicht, wobei auch hier die Kopplungsanordnung 32 auf Grund der Ω-förmigen Ausgestaltung der beiden Kopplungselemente 36', 36" bzw. der beiden Verbindungsbereiche 52', 58" aus Flachmaterial bei vergleichsweise großem Wärmeleitwiderstand eine große Oberfläche zur Wärmeabgabe nach außen hin bereitstellt.

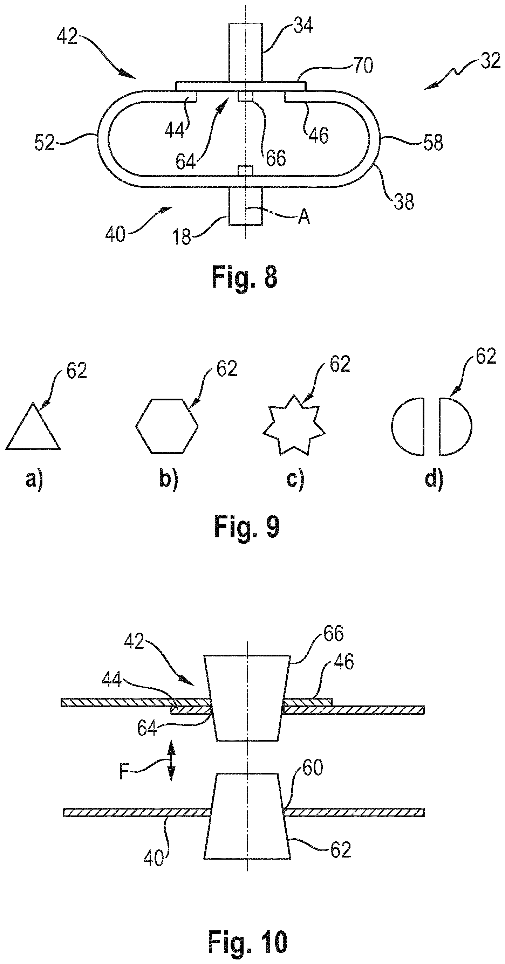

Eine weitere alternative Ausgestaltungsart einer Kopplungsanordnung 32 ist in Fig. 8 dargestellt. Bei dieser Ausgestaltungsform überlappen sich die beiden Endbereiche 44, 46 des Flachmaterialstücks 38 im zweiten Kopplungsbereich 42 nicht. Stattdessen ist jeder der Endbereiche 44, 46 mit einem ebenfalls bandartig bzw. als Flachmaterialstück bereitgestellten Verbindungsteil 70 verbunden. Jeder der Endbereiche 44, 46 ist mit dem Verbindungsteil 70 vorzugsweise damit sich überlappend beispielsweise durch Verschweißung, Vernietung, Verschraubung oder in sonstiger Weise fest verbunden, um eine geschlossene, ringartige Konfiguration der Kopplungsanordnung 32 bereitzustellen. Im Verbindungsteil 70 ist die zweite Formschluss-Kopplungsformation 64 vorgesehen.

Eine derartige Ausgestaltung eines Kopplungsbereichs oder, sofern die Ausgestaltungsform gemäß Fig. 7 betroffen ist, auch gegebenenfalls beider Kopplungsbereiche kann selbstverständlich auch bei den in den Figuren 1-7 dargestellten Ausgestaltungsformen vorgesehen sein. Ferner ist in Figur 8 zu erkennen, dass dort beide Verbindungsbereiche 52, 58 mit im Wesentlichen U-förmiger Gestalt ausgebildet sind. Auch dies könnte bei einem oder beiden Verbindungsbereiche der vorangehend beschriebenen Ausgestaltungsformen vorgesehen sein.

Die Fig. 9 zeigt in ihren Darstellungen a) bis d) mit Bezug auf die erste Gegen-Formschluss-Kopplungsformation 62 der Schwenkwelle 18 verschiedene Beispiele für die Ausgestaltung der am Antriebsorgan 34 bzw. der Schwenkwelle 18 vorgesehenen Gegen-Formschluss-Kopplungsformationen 66, 62, die selbstverständlich auch bei allen vorangehend beschriebenen Ausgestaltungsformen zum Einsatz kommen können.

Die Gegen-Formschluss- Kopplungsformation 62 der Fig. 9a) ist grundsätzlich mit einem Mehrkant-Außenprofil in Form eines Dreiecks ausgebildet. Auch die Fig. 9b) zeigt ein Mehrkant-Außenprofil, hier in Form eines Außensechskants. Es ist darauf hinzuweisen, dass selbstverständlich auch eine andere Anzahl an Ecken bzw. Kanten, beispielsweise eine 4-eckige oder 5-eckige Ausgestaltung möglich ist.

Die Fig. 9c) zeigt eine sternartige Ausgestaltung der Gegen-Formschluss-Kopplungsformation 62, die beispielsweise an die Geometrie eines für einen TORX-Schraubenkopf einzusetzenden Schraubwerkzeugs angelehnt sein kann. Es ist darauf hinzuweisen, dass bei einer derartigen sternartigen Ausgestaltung die Anzahl an nach außen vorspringenden Zacken anders sein kann, als in Fig. 9c) dargestellt.

In Fig. 9d) ist eine Struktur gezeigt, welche zwei nebeneinanderliegende und axial vorspringende Eingriffsbereiche mit jeweils halbkreisartiger Umfangsgeometrie und gegenseitigem Abstand aufweist. Insbesondere im Zusammenhang mit dieser Ausgestaltungsform ist darauf hinzuweisen, dass die Gegen-Formschluss-Kopplungsformation 62 eine andere Anzahl an derartigen Vorsprüngen mit anderen Geometrien aufweisen kann.

In Zuordnung zu einer jeweiligen Gegen-Formschluss-Kopplungsformation 62, 66, die jeweils durch die Ausgestaltung der axialen Endbereiche der Schwenkwelle 18 bzw. des Antriebsorgans 34 bzw. daran festzulegender und diese somit axial fortsetzender Komponenten bereitgestellt ist, sind die Formschluss-Kopplungsformationen 60, 64 an den Kopplungsbereichen 40, 42 komplementär, also als entsprechend geformte und dimensionierte Öffnungen ausgebildet, welche eine im Wesentlichen spielfreie Aufnahme einer jeweiligen Gegen-Formschluss-Kopplungsformation 62, 66 gewährleisten. Ein axialer Zusammenhalt der Kopplungsbereiche 40, 42 mit der Schwenkwelle 18 bzw. dem Antriebsorgan 34 kann einerseits dadurch gewährleistet werden, dass die Kupplungsbereiche 40, 42 sich an jeweiligen schulterartigen Radialvorsprüngen an der Schwenkwelle 18 bzw. am Antriebsorgan 34 axial abstützen. Zusätzlich kann zur axialen Festlegung in der jeweils anderen Richtung in das axiale Ende der Schwenkwelle 18 bzw. des Antriebsorgans 34 ein Befestigungsbolzen, beispielsweise Schraubbolzen oder Nietbolzen, eingebracht werden, der, beispielsweise in Verbindung mit einer Beilagscheibe, einen jeweiligen Kopplungsbereich 40, 42 radial übergreift und somit ein Loslösen desselben verhindert.

Die Fig. 10 zeigt ein besonders vorteilhaftes Beispiel für die Ausgestaltung der Gegen-Formschluss-Kopplungsformationen 62, 66. Hier sind die axialen Endbereiche der Schwenkwelle 18 bzw. des Antriebsorgans 34 auf das jeweils andere Bauteil zu sich verjüngend, beispielsweise konisch verjüngend, ausgebildet. Dies kann bei allen, insbesondere den mit Bezug auf die Fig. 9 erläuterten Formgebungen der Gegen-Formschluss-Kopplungsformationen 62, 66 realisiert werden.

Durch diese sich verjüngende Gestalt der Gegen-Formschluss-Kopplungsformationen 62, 66 kann unter Berücksichtigung des Umstandes, dass die beiden Kopplungsbereiche 40, 42 in der vorangehend erläuterten Art und Weise durch eine Kraft F in Richtung voneinander weg und somit auf die Schwenkwelle 18 bzw. das Antriebsorgan 34 zu vorgespannt sind, gewährleistet werden, dass einerseits die Gegen-Formschluss-Kopplungsformationen 62, 66 leicht in die zugeordneten Formschluss-Kopplungsformationen 60, 64 eingeführt werden können, durch die Vorspannung der Kopplungsbereiche 40, 42 gegen die Schwenkwelle 18 bzw. das Antriebsorgan 34 und die dabei entstehende axiale Abstützung an den sich verjüngenden Bereichen gleichzeitig ein spielfreier und somit eine definierte Drehkopplung erzeugender Eingriff gewährleistet ist. Auf das Vorsehen zusätzlicher Befestigungsorgane, wie zum Beispiel Schraubbolzen, Nietbolzen und Beilagscheiben, durch welche ein axial fester Zusammenhalt der jeweiligen Kopplungsteile 36, 38 mit der Schwenkwelle 18 bzw. dem Antriebsorgan 34 gewährleistet werden kann, kann verzichtet werden. Die Kopplungsanordnung 32 ist durch ihre eigene axiale Vorspannung selbst in Eingriff mit der Schwenkwelle 18 bzw. den Antriebsorgan 34 gehalten bzw. dazwischen zentriert.

Obgleich die vorangehend beschriebene Ankopplung der Kopplungsanordnung 32 an die Schwenkwelle 18 bzw. das Antriebsorgan 34 aufgrund des einfachen Aufbaus und der definierten Drehkopplung besonders vorteilhaft ist, sei abschließend darauf hingewiesen, dass grundsätzlich auch andere Arten der Verbindung, wie zum Beispiel Verschraubung bzw. Vernietung, vorzugsweise mit jeweils mehreren Bolzen, Verschweißen, Verstemmen oder dergleichen, zur Anbindung der Kopplungsanordnung 32 an die Schwenkwelle 18 oder/und das Antriebsorgan 34 eingesetzt werden können.

## Patentansprüche

1. Kopplungsanordnung zur Drehkopplung einer Schwenkwelle einer Klappenblende einer Abgasklappe mit einem Antriebsorgan, umfassend ein mit Flachmaterial ausgebildetes Kopplungselement (36) mit einem zur Ankopplung an die Schwenkwelle (18) ausgebildeten ersten Kopplungsbereich (40), einem zur Ankopplung an das Antriebsorgan (34) ausgebildeten zweiten Kopplungsbereich (42) und wenigstens einem den ersten Kopplungsbereich (40) mit dem zweiten Kopplungsbereich (42) verbindenden Verbindungsbereich (52, 58), wobei im Kopplungszustand der erste Kopplungsbereich (40) und der zweite Kopplungsbereich (42) in Richtung aufeinander zu oder in Richtung voneinander weg vorgespannt sind, wobei anschließend an einen ersten Endbereich (48) des ersten Kopplungsbereichs (40) und einen ersten Endbereich (50) des zweiten Kopplungsbereichs (42) ein erster Verbindungsbereich (52) vorgesehen ist **dadurch gekennzeichnet, dass** anschließend an einen zweiten Endbereich (54) des ersten Kopplungsbereichs (40) und einen zweiten Endbereich (56) des zweiten Kopplungsbereichs (42) ein zweiter Verbindungsbereich (58) vorgesehen ist, dass das Kopplungselement (36) aus einem Flachmaterialstück (38) ausgebildet ist, und dass ein Kopplungsbereich (42) von erstem Kopplungsbereich (40) und zweitem Kopplungsbereich (42) einander überlappend angeordnete oder durch ein Verbindungsteil (70) verbundene Endbereiche (44, 46) des Flachmaterialstücks (38) umfasst.

2. Kopplungsanordnung nach Anspruch 1, **dadurch gekennzeichnet, dass** das wenigstens eine Kopplungselement (36) mit Blechmaterial, vorzugsweise Stahlblech oder Titanblech, ausgebildet ist.

3. Kopplungsanordnung zur Drehkopplung einer Schwenkwelle einer Klappenblende einer Abgasklappe mit einem Antriebsorgan, umfassend wenigstens ein mit Flachmaterial ausgebildetes Kopplungselement (36', 36") mit einem zur Ankopplung an die Schwenkwelle (18) ausgebildeten ersten Kopplungsbereich (40), einem zur Ankopplung an das Antriebsorgan (34) ausgebildeten zweiten Kopplungsbereich (42) und wenigstens einem den ersten Kopplungsbereich (40) mit dem zweiten Kopplungsbereich (42) verbindenden Verbindungsbereich (52', 58"), wobei im Kopplungszustand der erste Kopplungsbereich (40) und der zweite Kopplungsbereich (42) in Richtung aufeinander zu oder in Richtung voneinander weg vorgespannt sind, **dadurch gekennzeichnet, dass** zwei Kopplungselemente (36', 36") vorgesehen sind, und dass der erste Kopplungsbereich (40) einen ersten Endbereich (68') eines der beiden Kopplungselemente (36', 36") und einen ersten Endbereich (68") des anderen der beiden Kopplungselemente (36', 36") umfasst und der zweite Kopplungsbereich (40) einen zweiten Endbereich (70') des einen der beiden Kopplungselemente (36', 36") und einen zweiten Endbereich (70") des anderen der beiden Kopplungselemente (36', 36") umfasst.

4. Kopplungsanordnung nach Anspruch 3, dass die beiden ersten Endbereiche (68', 68") der beiden Kopplungselemente (36', 36") einander überlappend angeordnet oder durch ein Verbindungsteil verbunden sind und die beiden zweiten Endbereiche (70', 70") der beiden Kopplungselemente (36', 36") einander überlappend angeordnet oder durch ein Verbindungsteil verbunden sind.

5. Kopplungsanordnung nach Anspruch 3 oder 4, **dadurch gekennzeichnet, dass** jedes der beiden Kopplungselemente (36', 36") aus einem Flachmaterialstück (38', 38") gebildet ist.

6. Kopplungsanordnung nach einem der vorangehenden Ansprüche, **dadurch gekennzeichnet, dass** wenigstens ein Verbindungsbereich (52, 58) V-förmig ausgebildet ist.

7. Kopplungsanordnung nach einem der vorangehenden Ansprüche, **dadurch gekennzeichnet, dass** wenigstens ein Verbindungsbereich (52, 58) Ω-förmig ausgebildet ist.

8. Kopplungsanordnung nach einem der vorangehenden Ansprüche, **dadurch gekennzeichnet, dass** wenigstens ein Verbindungsbereich (52, 58) U-förmig ausgebildet ist.

9. Abgasklappe, insbesondere für den Abgasstrom einer Brennkraftmaschine, umfassend ein Klappenrohr (14), eine im Inneren des Klappenrohrs (14) an einer um eine Schwenkachse (A) drehbaren Schwenkwelle (18) getragene Klappenblende (16) sowie einen Schwenkantrieb (12) für die Schwenkwelle (18) mit einem Antriebsorgan (34), ferner umfassend eine das Antriebsorgan (34) mit der Schwenkwelle zur gemeinsamen Drehung um die Schwenkachse (A) koppelnde Kopplungsanordnung (32) nach einem der vorangehenden Ansprüche.

10. Abgasklappe nach Anspruch 9, **dadurch gekennzeichnet, dass** an der Schwenkwelle (18) eine erste Gegen-Formschluss-Kopplungsformation (62) und an dem ersten Kopplungsbereich (40) der Kopplungsanordnung (32) eine mit der ersten Gegen-Formschluss-Kopplungsformation (62) in Kopplungseingriff stehende erste Formschluss-Kopplungsformation (60) vorgesehen sind, und dass an dem Antriebsorgan (34) eine zweite Gegen-Formschluss-Kopplungsformation (66) und an dem zweiten Kopplungsbereich (42) der Kopplungsanordnung (32) eine mit der zweiten Gegen-Formschluss-Kopplungsformation (66) in Kopplungseingriff stehende zweite Formschluss-Kopplungsformation (64) vorgesehen sind.

11. Abgasklappe nach Anspruch 10, **dadurch gekennzeichnet, dass** wenigstens eine Formschluss-Kopplungsformation (60, 64) oder Gegen-Formschluss-Kopplungsformation (62, 66) ein Mehrkant-Außenprofil und die jeweils zugeordnete Gegen-Formschluss-Kopplungsformation (66, 62) oder Formschluss-Kopplungsformation (64, 60) ein komplementäres Mehrkant-Innenprofil aufweist.

12. Abgasklappe nach einem der Ansprüche 9-11, **dadurch gekennzeichnet, dass** der erste Kopplungsbereich (40) in Richtung auf die Schwenkwelle (18) zu vorgespannt ist und der zweite Kopplungsbereich (42) in Richtung auf das Antriebsorgan (34) zu vorgespannt ist, vorzugsweise derart, dass durch die Kopplungsanordnung (32) die Schwenkwelle (18) in Richtung vom Antriebsorgan (34) weg vorgespannt ist.

13. Abgasklappe nach Anspruch 10 und Anspruch 12, **dadurch gekennzeichnet, dass** die erste Gegen-Formschluss-Kopplungsformation (62) sich in Richtung auf das Antriebsorgan (34) zu verjüngend ausgebildet ist, oder/und dass die zweite Gegen-Formschluss-Kopplungsformation (66) sich in Richtung auf die Schwenkwelle (18) zu verjüngend ausgebildet ist.

## Claims

1. Coupling device for the rotary coupling of a pivot shaft of a flap diaphragm of an exhaust gas flap with a drive member, comprising at least one coupling element (36) adapted with a flat material with a first coupling area (40) configured for coupling to the pivot shaft (18), with a second coupling area (42) configured for coupling to the drive member (34) and with at least one connection area (52, 58) connecting the first coupling area (40) to the second coupling area (42), wherein, in the coupled state, the first coupling area (40) and the second coupling area (42) are prestressed in a direction towards one another or in a direction away from one another, wherein a first connection area (52) is provided adjacent to a first end area (48) of the first coupling area (40) and a first end area (50) of the second coupling area (42) **characterized in that** a second connection area (58) is provided adjacent to a second end area (54) of the first coupling area (40) and a second end area (56) of the second coupling area (42), that the coupling element (36) is adapted with a piece of flat material and that one coupling area (42) out of first coupling area (40) and second coupling area (42) comprises end areas (44, 46) of the piece of flat material (38) which are arranged overlapping one another or connected by a connection piece (70).

2. Coupling device in accordance with claim 1, **characterized in that** the at least one coupling element (36) is formed with sheet metal material, preferably steel sheet or titanium sheet.

3. Coupling device for the rotary coupling of a pivot shaft of a flap diaphragm of an exhaust gas flap with a drive member, comprising at least one coupling element (36', 36") adapted with flat material with a first coupling area (40) configured for coupling to the pivot shaft (18), a second coupling area (42) configured for coupling to the drive member (34) and with at least one connection area (52', 58') connecting the first coupling area (40) to the second coupling area (42), wherein in the coupled state, the first coupling area (40) and the second coupling area (42) are prestressed in a direction towards one another or in a direction away from one another, **characterized in that** two coupling elements (36', 36") are provided, and that the first coupling area (40) comprises a first end area (68') of one of the two coupling elements (36', 36") and a first end area (68") of the other of the two coupling elements (36', 36"), and the second coupling area (42) comprises a second end area (70') of one of the two coupling elements (36', 36") and a second end area (70") of the other of the two coupling elements (36', 36").

4. Coupling device in accordance with claim 3, **characterized in that** the two first end areas (68', 68") of the two coupling elements (36', 36") are arranged overlapping one another or connected to one another by a connecting part and the two second end areas (70', 70") of the two coupling elements (36', 36") are arranged overlapping one another or connected to one another by a connecting part.

5. Coupling device in accordance with claim 3 or 4, **characterized in that** each of the two coupling elements (36', 36") is formed from a piece of flat material (38', 38").

6. Coupling device in accordance with one of the preceding claims, **characterized in that** at least one connection area (52, 58) has a V-shaped configuration.

7. Coupling device in accordance with one of the preceding claims, **characterized in that** at least one connection area (52, 58) has an Ω-shaped configuration.

8. Coupling device in accordance with one of the preceding claims, **characterized in that** at least one connection area (52, 58) has a U-shaped configuration.

9. Exhaust gas flap, especially for the exhaust gas stream of an internal combustion engine, comprising a flap tube (14), a flap diaphragm (16) carried in the interior of the flap tube (14) on a pivot shaft (18) rotatable about a pivot axis (A) as well as a pivot drive (12) for the pivot shaft (18) with a drive member (34), and further comprising a coupling device (32) in accordance with one of the preceding claims coupling the drive member (34) with the pivot shaft for joint rotation about the pivot axis (A).

10. Exhaust gas flap in accordance with claim 9, **characterized in that** a first opposite positive-locking coupling formation (62) is provided on the pivot shaft (18) and a first positive-locking coupling formation (60) meshing in a coupling manner with the first opposite positive-locking coupling formation (62) is provided at the first coupling area (40) of the coupling device (32), and that a second opposite positive-locking coupling formation (66) is provided at the drive member (34) and a second positive-locking coupling formation (64) meshing in a coupling manner with the second opposite positive-locking coupling formation (66) is provided at the second coupling area (42) of the coupling device (32).

11. Exhaust gas flap in accordance with claim 10, **characterized in that** at least one positive-locking coupling formation (60, 64) or opposite positive-locking coupling formation (62, 66) has a polygonal outer profile and the opposite positive-locking coupling formation (66, 62) or positive-locking coupling formation (64, 60) associated with the latter has a complementary polygonal inner profile.

12. Exhaust gas flap in accordance with one of the claims 9-11, **characterized in that** the first coupling area (40) is prestressed in a direction towards the pivot shaft (18) and the second coupling area (42) is prestressed in a direction towards the drive member (34), preferably such that the pivot shaft (18) is prestressed by the coupling device (32) in a direction away from the drive member (34).

13. Exhaust gas flap in accordance with claim 10 and claim 12, **characterized in that** the first opposite positive-locking coupling formation (62) is configured as tapering in a direction towards the drive member (34), or/and that the second opposite positive-locking coupling formation (66) is configured as tapering in a direction towards the pivot shaft (18).

## Revendications

1. Arrangement d'accouplement pour l'accouplement rotatif d'un arbre pivotant d'un diaphragme de clapet d'un clapet de gaz d'échappement avec un élément d'entraînement, comprenant un élément d'accouplement (36) adapté avec du matériau plat avec une première zone d'accouplement (40) adaptée pour l'accouplement à l'arbre pivotant (18), avec une deuxième zone d'accouplement (42) adaptée pour l'accouplement à l'élément d'entraînement (34) et avec au moins une zone de connexion (52, 58) reliant la première zone d'accouplement (40) à la deuxième zone d'accouplement (42), la première zone d'accouplement (40) et la deuxième zone d'accouplement (42) étant précontraintes à l'état accouplé dans une direction l'une vers l'autre ou dans une direction opposée l'une à l'autre, dans laquelle une première zone de connexion (52) est prévue adjacente à une première zone d'extrémité (48) de la première zone d'accouplement (40) et à une première zone d'extrémité (50) de la deuxième zone d'accouplement (42), **caractérisée en ce qu'**une deuxième zone de connexion (58) est prévue adjacente à une deuxième zone d'extrémité (54) de la première zone d'accouplement (40) et une deuxième zone d'extrémité (56) de la deuxième zone d'accouplement (42), **en ce que** l'élément d'accouplement (36) est formé avec une pièce de matériau plat (38) et **en ce qu'**une zone d'accouplement (42) parmi la première zone d'accouplement (40) et la deuxième zone d'accouplement (42) comprend des zones d'extrémité (44, 46) de la pièce de matériau plat (38) qui sont disposées en recouvrement ou reliées par une pièce de connexion (70).

2. Arrangement d'accouplement selon la revendication 1, **caractérisé en ce que** ledit au moins un élément d'accouplement (36) est réalisé en tôle, de préférence en tôle d'acier ou en tôle de titane.

3. Arrangement d'accouplement pour l'accouplement rotatif d'un arbre pivotant d'un diaphragme de clapet d'un clapet de gaz d'échappement avec un élément d'entraînement, comprenant au moins un élément d'accouplement (36', 36") adapté avec du matériau plat, avec une première zone d'accouplement (40) adaptée pour l'accouplement à l'arbre pivotant (18), une deuxième zone d'accouplement (42) adaptée pour l'accouplement à l'élément d'entraînement (34) et au moins une zone de connexion (52', 58') reliant la première zone d'accouplement (40) à la deuxième zone d'accouplement (42), où, à l'état accouplé, la première zone d'accouplement (40) et la deuxième zone d'accouplement (42) sont précontraintes dans une direction l'une vers l'autre ou dans une direction s'éloignant l'une de l'autre, **caractérisé en ce que** deux éléments d'accouplement (36', 36") sont prévus, et que la première zone d'accouplement (40) comprend une première zone d'extrémité (68') d'un des deux éléments d'accouplement (36', 36") et une première zone d'extrémité (68") de l'autre des deux éléments d'accouplement (36', 36"), et la deuxième zone d'accouplement (42) comprend une deuxième zone d'extrémité (70') de l'un des deux éléments d'accouplement (36', 36") et une deuxième zone d'extrémité (70") de l'autre des deux éléments d'accouplement (36', 36").

4. Arrangement d'accouplement selon la revendication 3, **caractérisé en ce que** les deux premières zones d'extrémité (68', 68") des deux éléments d'accouplement (36', 36") sont disposées en chevauchement ou reliées l'une à l'autre par une pièce de connexion et les deux deuxièmes zones d'extrémité (70', 70") des deux éléments d'accouplement (36', 36") sont disposées en chevauchement ou reliées par une pièce de connexion.

5. Arrangement d'accouplement selon les revendications 3 ou 4, **caractérisé en ce que** chacun des deux éléments d'accouplement (36', 36") est formé d'une pièce de matériau plat (38', 38").

6. Arrangement d'accouplement selon l'une des revendications précédentes, **caractérisé en ce qu'**au moins une zone de connexion (52, 58) présente une configuration en forme de V.

7. Arrangement d'accouplement selon l'une des revendications précédentes, **caractérisé en ce qu'**au moins une zone de connexion (52, 58) présente une configuration en forme de Ω.

8. Arrangement d'accouplement selon l'une des revendications précédentes, **caractérisé en ce qu'**au moins une zone de connexion (52, 58) présente une configuration en forme de U.

9. Clapet de gaz d'échappement, en particulier pour le flux de gaz d'échappement d'un moteur à combustion interne, comprenant un tube de clapet (14), une diaphragme de clapet (16) portée à l'intérieur du tube de clapet (14) à un arbre de pivotement (18) rotatif autour d'un axe de pivotement (A) ainsi qu'un entraînement de pivotement (12) pour l'arbre de pivotement (18) avec un élément d'entraînement (34), et comprenant en outre un dispositif d'accouplement (32) selon une des revendications précédentes accouplant l'élément d'entraînement (34) à l'axe de pivotement pour une rotation commune autour de l'axe de pivotement (A).

10. Clapet de gaz d'échappement selon la revendication 9, **caractérisé en ce qu'**une première formation d'accouplement à engagement positif opposée (62) est prévu à l'arbre de pivotement (18) et une première formation d'accouplement à engagement positif (60) en engagement d'accouplement avec la première formation d'accouplement à engagement positif opposée (62) est prévue dans la première zone d'accouplement (40) de l'arrangement d'accouplement (32), et **en ce qu'**une deuxième formation d'accouplement à engagement positif opposée (66) est prévue à l'élément d'entraînement (34) et une deuxième formation d'accouplement à engagement positif (64) en engagement d'accouplement avec la deuxième formation d'accouplement à engagement positif opposée (66) est prévue dans la deuxième zone d'accouplement (42) de l'arrangement d'accouplement (32).

11. Clapet de gaz d'échappement selon la revendication 10, **caractérisé en ce qu'**au moins une formation d'accouplement à engagement positif (60, 64) ou une formation d'accouplement à engagement positif opposée (62, 66) présente un profil extérieur polygonal et la formation d'accouplement à engagement positif opposée (66, 62) ou la formation d'accouplement à engagement positif (64, 60) associée à celle-ci a un profil intérieur polygonal complémentaire.

12. Clapet de gaz d'échappement selon l'une des revendications 9-11, **caractérisé en ce que** la première zone d'accouplement (40) est précontrainte dans une direction vers l'arbre de pivotement (18) et la deuxième zone d'accouplement (42) est précontrainte dans une direction vers l'élément d'entraînement (34), de préférence de telle sorte que l'arbre de pivotement (18) est précontraint par l'arrangement d'accouplement (32) dans une direction opposée à l'élément d'entraînement (34).

13. Clapet de gaz d'échappement selon la revendication 10 et la revendication 12, **caractérisé en ce que** la première formation d'accouplement à engagement positif opposée (62) est configurée en se rétrécissant dans une direction vers l'élément d'entraînement (34), ou/et que la deuxième formation d'accouplement à engagement positif opposée (66) est configurée en se rétrécissant dans une direction vers l'arbre de pivotement (18).
